# EUROPÄISCHE PATENTSCHRIFT

(11) **EP 3 039 399 B1**
(45) Veröffentlichungstag und Bekanntmachung des Hinweises auf die Patenterteilung: **07.10.2020**
(21) Anmeldenummer: 14753071.1
(22) Anmeldetag: 19.08.2014
(51) Int. Cl.: G01N 1/28

(54) **LASERMIKRODISSEKTIONSSYSTEM UND LASERMIKRODISSEKTIONSVERFAHREN**
LASER MICRODISSECTION SYSTEM AND LASER MICRODISSECTION METHOD
SYSTÈME DE MICRODISSECTION PAR LASER ET PROCÉDÉ DE MICRODISSECTION PAR LASER

(30) Priorität: 30.08.2013 DE 102013109481
(43) Veröffentlichungstag der Anmeldung: 06.07.2016
(73) Patentinhaber: Leica Microsystems CMS GmbH, 35578 Wetzlar (DE)
(72) Erfinder: SCHLAUDRAFF, Falk, 35510 Butzbach (DE)
(74) Vertreter: Bradl, Joachim
(86) Internationale Anmeldenummer: PCT/EP2014/067664
(87) Internationale Veröffentlichungsnummer: WO 2015/028356

(56) Entgegenhaltungen:
- WO-A1-2006/076817
- WO-A1-2010/115394
- FR-A5- 2 178 555
- US-A1- 2011 062 087

## Beschreibung

Die Erfindung betrifft ein Lasermikrodissektionssystem und ein Lasermikrodissektionsverfahren gemäß den Oberbegriffen der unabhängigen Patentansprüche.

### Stand der Technik

Verfahren zur Bearbeitung biologischer Proben durch Lasermikrodissektion existieren bereits seit Mitte der 1970er Jahre (siehe z.B. Isenberg, G. et al.: Cell surgery by laser micro-dissection: a preparative method. Journal of Microscopy, Band 107, 1976, Seiten 19-24) und wurden seitdem kontinuierlich weiterentwickelt.

Bei der Lasermikrodissektion können Zellen, Geweberegionen usw. aus einer biologischen Probe ("Objekt", "Präparat") isoliert und als sogenannte Dissektate gewonnen werden. Ein besonderer Vorteil der Lasermikrodissektion ist der kurze Kontakt der Probe mit dem Laserstrahl, durch den diese kaum verändert wird. Die Gewinnung der Dissektate kann auf unterschiedliche Weise erfolgen (siehe z.B. Bancroft, J.D. und Gamble, M.: Theory and Practice of Histological Techniques. Elsevier Science, 2008, Seite 575, Kapitel "Laser Microdissection").

Beispielsweise kann in bekannten Verfahren aus der Probe mittels eines Infrarot- oder Ultraviolettlaserstrahls ein Dissektat isoliert werden, das unter dem Einfluss der Schwerkraft in einen geeigneten Dissektatauffangbehälter fällt. Das Dissektat kann dabei aus der Probe auch zusammen mit einer anhaftenden Membran ausgeschnitten werden. Bei der sogenannten Laser Capture Microdissection wird hingegen eine thermoplastische Membran mittels eines entsprechenden Laserstrahls erwärmt. Dabei verschmilzt die Membran mit dem gewünschten Bereich der Probe und kann in einem darauffolgenden Schritt durch Reißen entfernt werden. Eine weitere Alternative besteht darin, das Dissektat mittels des Laserstrahls an einen Deckel eines Dissektatauffangbehälters anzuheften. Bei bekannten inversen Mikroskopsystemen zur Lasermikrodissektion können nach oben katapultierte Dissektate auch an den Boden eines Dissektatauffangbehälters, der mit einer adhäsiven Beschichtung versehen ist, angeheftet werden.

Bekannte Mikroskopsysteme zur Lasermikrodissektion, wie sie beispielsweise aus der WO 98/14816 A1 bekannt sind, weisen eine Auflichteinrichtung auf, in deren Strahlengang ein Laserstrahl eingekoppelt wird. Der Laserstrahl wird durch das jeweils verwendete Mikroskopobjektiv auf die Probe fokussiert, die auf einem motorischautomatisch verfahrbaren Mikroskoptisch aufliegt. Eine Schnittlinie wird dadurch erzeugt, dass der Mikroskoptisch beim Schneiden verfahren wird, um die Probe relativ zu dem feststehenden Laserstrahl zu bewegen. Dies hat jedoch unter anderem den Nachteil, dass die Probe während des Erzeugens der Schnittlinie nicht ohne weiteres betrachtet werden kann, da diese sich im Gesichtsfeld bewegt und das Bild gegebenenfalls verschwommen erscheint.

Vorteilhafter sind daher Lasermikrodissektionssysteme, die Laserablenk- bzw. Laserscaneinrichtungen aufweisen, die dazu eingerichtet sind, den Laserstrahl bzw. dessen Auftreffpunkt über eine feststehende Probe zu bewegen. Derartige Lasermikrodissektionssysteme, die auch im Rahmen der vorliegenden Erfindung besondere Vorteile bieten, werden unten im Detail erläutert. Ein besonders vorteilhaftes Lasermikrodissektionssystem, das eine Laserablenkeinrichtung mit gegeneinander verstellbaren Glaskeilen im Laserstrahlengang aufweist, ist beispielsweise in der EP 1 276 586 B1 beschrieben.

In beiden Fällen, also sowohl in Lasermikrodissektionssystemen, in denen der Mikroskoptisch verfahren wird, als auch in Lasermikrodissektionssystemen, die eine Laserablenkeinrichtung aufweisen, wird in der Regel mit gepulsten Lasern gearbeitet, wobei durch jeden Laserpuls ein Loch bzw. eine Vertiefung in der Probe erzeugt wird. Eine Schnittlinie entsteht durch eine Aneinanderreihung derartiger Löcher bzw. Vertiefungen, gegebenenfalls mit Überlappung.

Die Lasermikrodissektion kann zur Gewinnung von Einzelzellen oder definierten Gewebebereichen verwendet werden, die mit einem Laserstrahl vom umliegenden Gewebe separiert und anschließend beispielsweise unterschiedlichen diagnostischen Analyseverfahren unterworfen werden. In der Onkologie kann die Lasermikrodissektion beispielsweise dafür eingesetzt werden, um spezifisch Tumorzellen aus einem mikroskopischen Schnitt zu isolieren und auf spezifische Metaboliten oder Proteine zu untersuchen.

Die WO 2010/15394 A1 beschreibt ein Lasermikrodissektionssystem mit einem Mikroskop, das eine Auflichteinrichtung mit einer Laserablenkeinrichtung aufweist. Diese lenkt einen Laserstrahl durch ein Objektiv auf eine gewünschte Stelle einer Probe, die in einer geschlossenen Laserablationskammer mit einer Zuführungs- und Abführungsleitung für ein Transportgas angeordnet ist. Der vom Laser getroffene Probenbereich wird ablatiert und das ablatierte Material mit dem Transportgas zu einem Massenspektrometer geleitet, welches die Zusammensetzung der Probe analysiert.

Die FR 2 178 555 A5 offenbart ein Mikroskop mit einem Probentisch zur Aufnahme einer Probe und mit einem angeschlossenen Laser, dessen Laserstrahl auf die Probe gerichtet wird und dort eine Pyrolyse des Probenmaterials bewirkt. Eine hermetische Kammer umschließt die Probe und ist mit einem Chromatographen verbunden. Ein Pyrolysegas transportiert die erzeugten molekularen Komponenten der Probe zum Chromatographen, wo sie quantitativ und qualitativ bestimmt werden.

Auch die WO 2006/076817 beschreibt eine Vorrichtung zur Laser-Ablationsanalyse mit einer Ablationskammer, die eine Düse zum Einleiten eines Transportgases aufweist. Die Düse erzeugt einen verwirbelten Gasstrom in der Kammer, der einen hohen Anteil der ablatierten Partikel zu einer Analyse-Einheit transportiert.

In herkömmlichen Lasermikrodissektionssystemen werden mikroskopische Gewebeschnitte, die üblicherweise mit einem Mikrotom erzeugt werden, bearbeitet und zur Gewinnung der Dissektate entlang der erwähnten Schnittlinie vollständig durchtrennt. Es ist beispielsweise nicht möglich, Material unterschiedlicher, übereinander liegender Gewebeschichten getrennt voneinander zu isolieren. Ein mittels herkömmlicher Lasermikrodissektion gewonnenes Dissektat stellt daher stets eine Sammelprobe durch die gesamte Dicke der bearbeiteten Probe dar; eine Differenzierung in einzelne Gewebeschichten mittels Lasermikrodissektion ist nicht möglich bzw. kann nur indirekt über die Dicke der Probe geschehen.

Auch ist die Bearbeitung dickerer Proben, die nicht mit einem Mikrotom vorgeschnitten werden, durch Lasermikrodissektion herkömmlicherweise nicht möglich, da gegebenenfalls aus der Probe mobilisiertes Material nicht wiedergewonnen werden kann. Ist es beispielsweise erforderlich, eine größere Menge eines bestimmten Gewebetyps oder einer bestimmten Gewebeschicht zu gewinnen, muss hierzu eine Vielzahl entsprechender Gewebeschnitte bearbeitet werden. Dies ist aufwendig und zeitintensiv.

Es besteht daher der Bedarf nach verbesserten Möglichkeiten zum Bearbeiten biologischer Proben durch Lasermikrodissektion, insbesondere zum Gewinnen von Probenmaterial aus definierten Gewebeschichten mit anschließender morphologischer Zuordnungsmöglichkeit.

### Offenbarung der Erfindung

Die vorliegende Erfindung schlägt ein Lasermikrodissektionssystem mit einer Spüleinrichtung und ein Lasermikrodissektionsverfahren mit den Merkmalen der unabhängigen Patentansprüche vor. Bevorzugte Ausgestaltungen sind Gegenstand der abhängigen Patentansprüche und der nachfolgenden Beschreibung.

Die vorliegende Erfindung geht von einem an sich bekannten Lasermikrodissektionssystem mit einem Mikroskop aus, das eine Auflichteinrichtung mit einer Laserablenkeinrichtung zum Führen eines durch eine Lasereinheit bereitgestellten Laserstrahls durch ein Mikroskopobjektiv des Mikroskops in einen Probenbereich zum Aufnehmen einer biologischen Probe und zum Verschieben eines Auftreffpunkts des Laserstrahls in dem Probenbereich umfasst.

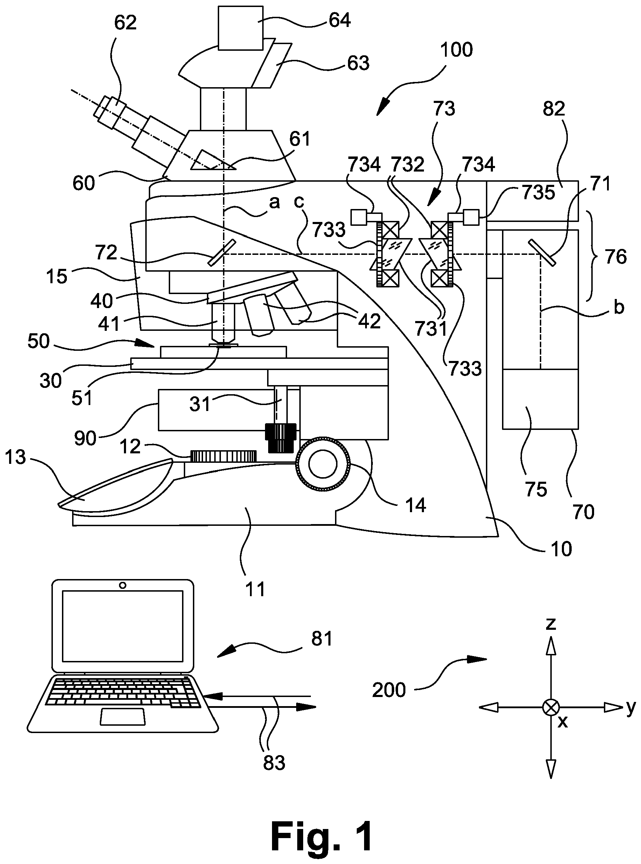

Ein entsprechendes Lasermikrodissektionssystem ist unten ausführlich unter Bezugnahme auf die Figur 1 erläutert. Mittels der Auflichteinrichtung wird in einem solchen Lasermikrodissektionssystem der Laserstrahl aus einer Laserlichtquelle in den Beobachtungsstrahlengang des Mikroskops eingekoppelt. Der Laserstrahl wird durch das Mikroskopobjektiv, das auch zum Betrachten der Probe verwendet wird, auf diese fokussiert. Somit verläuft, mit anderen Worten, der Strahlengang des Laserstrahls der Lasereinheit durch die Auflichteinrichtung und durch das Mikroskopobjektiv und schneidet eine Objektebene des Mikroskopobjektivs an einem einstellbaren Schnittpunkt, der mittels Ansteuersignalen an die Laserablenkeinrichtung vorgegeben wird.

Zur Vermeidung von Missverständnissen sei an dieser Stelle betont, dass das im Rahmen der vorliegenden Erfindung eingesetzte Lasermikrodissektionssystem mit Proben verwendet wird, die bereits mikroskopietauglich vorbereitet sind. Hierbei kann es sich beispielsweise um Gewebe-Dünnschnitte handeln, die mittels eines Mikrotoms aus einem größeren Gewebeblock herausgetrennt wurden, im vorliegenden Fall jedoch auch um dickere Schnitte aus einem entsprechenden Gewebeblock. Bei einem solchen Gewebeblock kann es sich beispielsweise um ein fixiertes Organ oder eine Biopsie eines entsprechenden Organs handeln. Das erfindungsgemäße

Lasermikrodissektionssystem dient daher nicht zur Gewinnung von Proben, sondern zu deren Bearbeitung sowie zur Isolation von bestimmten Bereichen hiervon. Es versteht sich, dass die vorliegende Erfindung auch mit Proben, die nicht mittels eines Mikrotoms gewonnen werden, zum Einsatz kommen kann, z.B. mit Ausstrichen, Mazeraten usw. Wie erwähnt, eignet sich die Erfindung jedoch auch zur Verarbeitung dickerer Proben, die nicht mittels eines Mikrotoms vorbereitet wurden.

Mikrotome werden ausschließlich bei der Vorbereitung von mikroskopischen Proben eingesetzt. Mikrotome können hierzu auch Laser aufweisen. Die mittels eines Mikrotoms erhaltenen Schnitte werden auf einen Objektträger, wie oben erwähnt, aufgebracht, gegebenenfalls dort befestigt, angefärbt usw. Erst dann stehen diese für einen Einsatz in dem Lasermikrodissektionssystem zur Verfügung. Ein Mikrotom unterscheidet sich in seinem Betrieb unter anderem dadurch fundamental von einem Lasermikrodissektionssystem, dass dort Schnitte mit möglichst homogener Schnittstärke gewonnen werden. Mikrotome sind daher dazu ausgebildet, eine große Anzahl an identischen Schnitten mit parallelen Schnittflächen zu erzeugen, wohingegen Lasermikrodissektionssysteme zum Heraustrennen von Dissektaten nach probenabhängigen Kriterien, beispielsweise nach visuellen morphologischen Kriterien, eingerichtet sind. Im vorliegenden Fall dient das Lasermikrodissektionssystem insbesondere zum Heraustrennen von Probenpartikeln, die anschließend in einem Suspendierfluid aufgenommen werden. Der Fachmann würde daher bei Mikrotomen eingesetzte technische Lösungen aufgrund der völlig unterschiedlichen Zielsetzung nicht auf derartige Lasermikrodissektionssysteme übertragen.

Der Mikroskoptisch ist in Lasermikrodissektionssystemen mit einer Laserablenkeinrichtung, wie erfindungsgemäß eingesetzt, beim Bearbeiten der Probe gegenüber dem Mikroskopobjektiv bezüglich der x- und y-Richtung (also senkrecht zur optischen Achse des Mikroskopobjektivs) feststehend angeordnet.

Im Gegensatz zu Lasermikrodissektionssystemen mit einem während des Dissektiervorgangs motorisch verfahrenen Mikroskoptisch (Scanningtisch), der insbesondere bei stark vergrößernden Objektiven eine hohe Positioniergenauigkeit besitzen muss, um präzise Schnitte zu ermöglichen, erweisen sich Lasermikrodissektionssysteme mit einer Laserablenkeinrichtung als einfacher und kostengünstiger in der Herstellung und besitzen Präzisionsvorteile.

Die Laserablenkeinrichtung weist in einer besonders vorteilhaften Ausführungsform zwei dicke, gegen eine optische Achse geneigte und unabhängig voneinander um eine optische Achse drehbare gläserne Keilplatten ("Glaskeile") auf, welche durch ihre Keilwinkel eine Strahlablenkung erzeugen. Durch die Drehung der gläsernen Keilplatten ist der resultierende Ablenkwinkel des Laserstrahls gegenüber der optischen Achse variabel. Am Ausgang der Laserablenkeinrichtung weist der Laserstrahl durch die Dicke und die Schrägstellung der gläsernen Keilplatten einen seitlichen Strahlversatz gegenüber der optischen Achse auf und trifft für alle Ablenkwinkel die Mitte der Objektivpupille des Mikroskopobjektivs. Der Schnittpunkt des Laserstrahls mit der Objektebene ist damit einstellbar.

Eine derartige Laserablenkeinrichtung ist insbesondere deshalb vorteilhaft gegenüber anderen Laserablenkeinrichtungen wie beispielsweise Spiegelscannern, Galvanometerscannern oder Schrittmotorscannern, weil diese nicht in einer zu der Objektivpupille konjugierten Ebene angeordnet werden muss. Damit ist auch keine sogenannte Pupillenabbildung erforderlich, um zu erreichen, dass der abgelenkte Strahl die Objektivpupille trifft. Bei der Lasermikrodissektion mit UV-Laserlicht wäre dabei beispielsweise eine UV-taugliche Pupillenabbildung erforderlich. Weitere Vorteile einer derartigen Laserablenkeinrichtung mit Keilplatten sind beispielsweise in der EP 1 276 586 B1 genannt.

### Vorteile der Erfindung

Das erfindungsgemäße Lasermikrodissektionssystem umfasst eine Spüleinrichtung mit Fluidabgabemitteln zum Bereitstellen eines Suspendierfluids in dem Probenbereich und Fluidentnahmemitteln zum Entnehmen einer unter Verwendung des Suspendierfluids erzeugten Suspension aus dem Probenbereich.

Wie nachfolgend noch im Detail erläutert, ermöglicht die vorliegende Erfindung das gezielte und exakte Ausführen von Schnitten und Ablationen in einem Gewebe oder einer anderen biologischen Probe, ohne diese vollständig zu durchtrennen bzw. ohne diese vollständig vom umliegenden Gewebe zu separieren. Das hierbei in Form von Probenpartikeln gewonnene Material kann mittels der Spüleinrichtung gezielt gesammelt werden. Beispielsweise kann hierbei eine definierte Zellschicht oder eine Anzahl definierter Zellschichten gezielt abgetragen werden, wobei die abgetragenen Zellen, Zellfragmente oder Zellverbünde (beispielsweise einer bestimmten Gewebeschicht) für weiterführende Untersuchungen zur Verfügung gestellt werden können.

Wie erläutert, muss in herkömmlichen Lasermikrodissektionssystemen ein entsprechender flächiger Schnitt auf einem Objektträger immer vollständig mittels des verwendeten Laserstrahls durchtrennt werden, um Dissektate zu gewinnen. Eine Gewinnung einzelner Zell- oder Gewebeschichten ist deshalb nicht möglich.

Mittels herkömmlicher Einrichtungen zur Laserablation können andererseits zwar gegebenenfalls einzelne Gewebeschichten ablatiert werden, ohne ein hierdurch bearbeitetes Gewebe, beispielsweise während einer Operation, vollständig zu durchtrennen. Derartige Einrichtungen werden beispielsweise zur intravitalen Thromboseinduktion oder zur Manipulation von mehreren hundert Mikrometern dicken Gewebeverbänden und von Zellkulturen eingesetzt. In derartigen Einrichtungen zur Laserablation besteht in der Regel jedoch keine Möglichkeit, das ablatierte Material wiederzugewinnen. Die Wiedergewinnung ist bestenfalls bei manipulierten Zellkulturen möglich, falls diese auf zur Lasermikrodissektion geeigneten Trägermaterialien anwachsen und auf einem geeigneten Tisch zum Auffangen von Dissektaten aufgebracht werden können.

Durch die Spüleinrichtung der vorliegenden Erfindung kann hingegen jede Art von Probe und das jeweils abgetragenen Material, welches in Form von Probenpartikeln vorliegt, überspült werden. Hierbei wird ein geeignetes Suspendierfluid eingesetzt, beispielsweise ein hinsichtlich seines pH-Werts und/oder seiner Zusammensetzung mit der Probe und/oder dem nachfolgenden Untersuchungsverfahren kompatibler Puffer, der ggf. auch temperiert werden kann. In diesem werden die Probenpartikel aufgenommen. Es ist insbesondere kein xy-Mikroskoptisch mit zusätzlichen Auffangbehältern für angeschnittene Dissektate erforderlich. Ebenso entfällt das Transferieren der Dissektate aus den Auffangbehältern in separate Reaktionsgefäße für anschließende Untersuchungen.

Ist im Rahmen dieser Anmeldung von einer "Suspension" die Rede, wird hierunter ein heterogenes Stoffgemisch verstanden, wobei die genannten Probenpartikel in einem entsprechenden "Suspendierfluid" gleichmäßig oder ungleichmäßig verteilt, also "suspendiert" sind. Die Probenpartikel können zumindest zum Teil auch auf dem Suspendierfluid aufschwimmen.

Durch das Suspendieren der Probenpartikel können diese in Richtung der Fluidentnahmemittel gespült werden. Es versteht sich, dass hierzu auch geeignete Fluidführungsmittel, beispielsweise entsprechende Kompartimente oder Barrieren auf einem Probenhalter, eingesetzt werden können, die verhindern, dass das Suspendierfluid bzw. die Suspension unkontrolliert von der Probe abfließt.

Erfindungsgemäß kann ein Suspendier- und Entnahmeschritt auch beispielsweise mehrfach und stufen-/schrittweise pro Gewebeschicht durchgeführt werden, so dass die Probe, beispielsweise auch mittels eines gekühlten Suspendierfluids, zwischen den einzelnen Bearbeitungsschritten abgekühlt werden kann. Eine etwaige Aufheizung durch die Laserbearbeitung und hierdurch gegebenenfalls bewirkte negative Effekte können hierdurch zuverlässig vermieden werden.

Erfindungsgemäß sind in diesem Zusammenhang Fluidentnahmemittel mit Saugmitteln zum Absaugen der Suspension aus dem Probenbereich angeordnet. Derartige Saugmittel umfassen eine Fluidleitung, die mit den Fluidentnahmemitteln gekoppelt ist. Eine solche Fluidleitung kann mit hydrostatischen und/oder pumpenbetriebenen Absaugeinrichtungen zum Erzeugen eines entsprechenden Sogs verbunden sein, so dass eine vollständige Absaugung der Suspension auch bei Stauungen, die sich beispielsweise durch die Probenpartikel ergeben, gewährleistet ist.

Die Saugmittel umfassen Fluidsammelmittel zum Sammeln der Suspension und/oder eines hiervon abgeleiteten Fluids. Hierdurch kann beispielsweise das Suspendierfluid aus einer entsprechenden Suspension wiedergewonnen und erneut verwendet werden. Ein aus einer Suspension "abgeleitetes" Fluid wird beispielsweise aus der Suspension durch Abtrennen der Probenpartikel mittels eines Filters erhalten.

Das Abfiltern der Probenpartikel aus der mittels des Suspendierfluids erhaltenen Suspension ist besonders vorteilhaft, weil dies eine schonende Rückgewinnung der Probenpartikel ermöglicht. Die Suspension wird hierzu durch einen geeigneten Filter gesaugt, der als Teil der Fluidentnahmemittel ausgebildet oder an diesen angebracht ist. Die Probenpartikel auf einem entsprechenden Filter können anschließend beispielsweise in einem weiteren Puffer aufgenommen oder direkt auf dem Filter weiter bearbeitet werden. Da die Probenpartikel auf einem entsprechenden Filter nahezu trocken vorliegen, können diese sehr rasch vollständig getrocknet werden, beispielsweise durch Gefriertrocknung, und anschließend ohne Qualitätsverlust aufbewahrt werden.

Eine direkte Bearbeitung der Probenpartikel auf einem entsprechenden Filter, beispielsweise durch Färbetechniken, immunhistochemische oder molekularbiologische Techniken, ermöglicht aufgrund des reduzierten Volumens eine Einsparung gegebenenfalls kostspieliger Reagenzien.

Alternativ zur Verwendung eines entsprechenden Filters ist es selbstverständlich auch möglich, die Suspension insgesamt abzusaugen und die Probenpartikel durch Abzentrifugieren oder einfache Sedimentation zu gewinnen. Diese Alternative gehört nicht zur Erfindung. Werden Filtermittel verwendet, ist es besonders vorteilhaft, wenn diese mit den Fluidentnahmemitteln mittels einer Schnellkupplung verbunden sind. Beispielsweise können die Filtermittel in geeigneten Kartuschen angebrachte Membranen aus Zellstoffmaterial oder bio- und/oder chemikalienkompatiblen Kunststoffen aufweisen. Entsprechende Kartuschen können beispielsweise auf einen hierzu entsprechend ausgebildeten Stutzen der Fluidentnahmemittel aufgesteckt oder mittels entsprechender Kupplungen angebracht werden. Unter einer "Schnellkupplung" wird in diesem Zusammenhang eine Kupplung verstanden, die im Betrieb und ohne das übrige Lasermikrodissektionssystem zu zerlegen, insbesondere ohne Werkzeug, gelöst werden kann.

Entsprechende Filtermittel können hierdurch mit austauschbaren Filtern versehen werden, die auch als Wegwerfartikel ausgebildet sein können. Dies vermeidet aufwendige Reinigungsschritte und reduziert die Gefahr von Verschleppungen. Beispielsweise können auch sterilisierbare Filterkartuschen verwendet werden.

Um eine besonders kontrollierte Gewinnung entsprechenden Probenmaterials zu gewährleisten, kann ein erfindungsgemäßes Lasermikrodissektionssystem auch mit einer Spüleinrichtung ausgestattet sein, die zumindest eine Druckmesseinrichtung und/oder Einstellmittel zum Einstellen eines Drucks und/oder eines Volumenstroms des Suspendierfluids und/oder der Suspension aufweist. Hierdurch lässt sich beispielsweise auch ein Zusetzen eines verwendeten Filters erkennen, was sich beispielsweise dadurch äußert, dass der für das Absaugen einer bestimmten Fluidmenge erforderliche Sog über einem erwarteten Wert liegt. Die Druckmesseinrichtung, die zum Messen eines (negativen) Drucks bzw. Sogs in einer entsprechenden Saugleitung eingerichtet ist, kann in diesem Fall auch ein Signal an eine Benutzerinformationseinheit ausgeben, das angibt, dass der jeweils verwendete Filter zu wechseln ist. Ein entsprechender Druckwert kann auch als Maß für eine Anzahl an Probenpartikeln verwendet werden.

Ein erfindungsgemäßes Lasermikrodissektionssystem ist dann besonders vorteilhaft, wenn die Spüleinrichtung eine Kühlvorrichtung zum Kühlen des Suspendierfluids und/oder eine Temperiereinrichtung zur Bereitstellung einer konstanten Temperatur des Suspendierfluids aufweist. Durch eine Kühlvorrichtung kann ein abgekühltes Suspendierfluid bereitgestellt werden, das beispielsweise eine länger andauernde Gewinnung von temperaturempfindlichem Probenmaterial ermöglicht. Entsprechend kaltes Suspendierfluid kann auch dazu verwendet werden, die durch den Laserstrahl hervorgerufene Erwärmung zu reduzieren. Eine Temperiereinrichtung kann insbesondere als Konstanttemperaturheizung ausgebildet sein, die eine konstante Temperatur des Suspendierfluids auch bei schwankenden Umgebungstemperaturen ermöglicht.

Bei einem erfindungsgemäßen Lasermikrodissektionssystem können die Fluidentnahmemittel auch Detektormittel zum Detektieren von Probenpartikeln in der Suspension umfassen. Beispielsweise kann es sich bei solchen Detektormitteln (die in diesem Fall auch ohne Filtermittel eingesetzt werden), um Zählkammern mit Lichtschranken in einer Fluidleitung für die Suspension handeln, die die Passage einzelner oder mehrerer Probenpartikel erkennen können. Die Detektormittel können damit zur Qualitätskontrolle eingesetzt werden. Wird beispielsweise erkannt, dass bei einem durchgeführten Verfahren eine geringere Anzahl an Probenpartikeln erhalten wird als erwartet, kann dies auf sodann näher zu identifizierende Probleme bei der Versuchsdurchführung hindeuten.

Werden die erläuterten Filtermittel eingesetzt, können die erläuterten Detektormittel auch stromauf eines entsprechenden Filters bereitgestellt sein. Die Detektormittel können auch digitaloptisch einen entsprechenden Filter auswerten und die hierauf befindlichen Probenpartikel detektieren.

Eine weitere vorteilhafte Ausgestaltung des erfindungsgemäßen Lasermikrodissektionssystems umfasst, die Fluidabgabemittel auch zum Bereitstellen eines Trocknungsfluids in dem Probenbereich auszubilden. Die Bereitstellung des Trocknungsfluids kann über dieselben oder andere Fluidkanäle wie jene zur Bereitstellung des Suspendierfluids erfolgen. Als Trocknungsfluid kann beispielsweise (gegebenenfalls temperierte und keim- und/oder staubfrei gefilterte) Luft und/oder ein anderes geeignetes Gas, beispielsweise ein Inertgas, eingesetzt werden. Eine Trocknung mittels eines solchen Trocknungsfluids kann am Ende eines Lasermikrodissektionsverfahrens oder auch zwischen einzelnen Verfahrensschritten, beispielsweise vor einem Wechsel eines Suspendierfluids, erfolgen.

Gemäß einer besonders vorteilhaften Ausgestaltung weist das Lasermikrodissektionssystem ein Mikroskop auf, das zur Untersuchung von Strukturen unterhalb einer Oberfläche der Probe eingerichtet ist. Dieses kann damit auch zur Beobachtung von tiefliegenden (also unter der Oberfläche der Probe liegenden bzw. inneren) Gewebeschichten genutzt werden. Dies ermöglicht Aussagen, bis zu welcher Tiefe ein entsprechendes Gewebe abgetragen werden kann, um einerseits möglichst viel Material zu erhalten, dieses aber andererseits nach Möglichkeit nicht mit "fremdem" Material (also Material aus einer darunterliegenden Gewebeschicht) zu kontaminieren. Ein Mikroskop, das zur Untersuchung von Strukturen unterhalb einer Oberfläche der Probe eingerichtet ist, kann beispielsweise als Konfokalmikroskop, insbesondere als Spinning-Disk-Konfokalmikroskop ausgebildet sein.

Derartige Mikroskoptypen sind dem Fachmann grundsätzlich bekannt. Sie eignen sich in besonderer Weise dazu, zuverlässige Tiefeninformationen zu erhalten. Ein erfindungsgemäßes Lasermikrodissektionssystem, das ferner mit einem der genannten Mikroskoptypen ausgestattet ist, erlaubt daher auch eine weitgehend automatische Verfahrensdurchführung. Durch wiederholte Untersuchung mit einem derartigen Mikroskop, jeweils nach einem oder mehreren Bearbeitungsschritten, kann kontinuierlich Schicht für Schicht einer entsprechenden Probe abgetragen werden. Ein hierzu verwendetes Mikroskop oder eine dem Mikroskop zugeordnete Bildauswerteeinheit kann dabei die einzelnen Gewebeschichten auch automatisiert erkennen. Ebenfalls automatisch kann hierbei jeweils die Spüleinrichtung zum Einsatz kommen. In einem entsprechenden Lasermikrodissektionssystem kann ferner auch ein Autosamplingsystem zum Einsatz kommen, in dem jeweils die Suspensionen aus getrennten Gewebeschichten in unterschiedlichen Probengefäßen aufgefangen werden können. Die Gewinnung von Probenmaterial vereinfacht sich hierdurch signifikant.

Ein entsprechendes Lasermikrodissektionsverfahren zum Gewinnen von Probenmaterial aus einer biologischen Probe ist ebenfalls Gegenstand der vorliegenden Erfindung. In dem erfindungsgemäßen Verfahren wird die Probe in einen Probenbereich eines Lasermikrodissektionssystems eingebracht. Wie oben bereits erläutert, werden mittels eines Laserstrahls Probenpartikel aus der Probe mobilisiert, also aus der jeweils verbleibenden Probe herausgetrennt.

Erfindungsgemäß wird, wie ebenfalls erläutert, eine Spüleinrichtung mit Fluidabgabemitteln und Fluidentnahmemitteln verwendet, wobei mittels der Fluidabgabemittel ein Suspendierfluid bereitgestellt wird, mittels des Suspendierfluids die Probenpartikel suspendiert werden, und eine unter Verwendung des Suspendierfluids erzeugte Suspension mit den Probenpartikeln anschließend aus dem Probenbereich entnommen wird.

Die Merkmale und Vorteile des erfindungsgemäßen Verfahrens wurden bereits unter Bezugnahme auf die erfindungsgemäße Vorrichtung und ihre bevorzugten Ausführungsformen erläutert. Auf diese Erläuterungen wird daher verwiesen.

Insbesondere kommt das Lasermikrodissektionsverfahren bei einem Lasermikrodissektionssystem zum Einsatz, wie es oben erläutert wurde, also einem Lasermikrodissektionssystem, in dem mittels der genannten Auflichteinrichtung ein durch die Lasereinheit bereitgestellter Laserstrahl durch ein Mikroskopobjektiv des Mikroskops in den Probenbereich und die in dem Probenbereich aufgenommene Probe geführt und mittels der Laserablenkeinrichtung verschoben wird.

Wesentliche Vorteile lassen sich erzielen, wenn in einem solchen Lasermikrodissektionsverfahren die Probenpartikel aus der Suspension ausgefiltert werden, wenn eine Probe verwendet wird, die mehrere Gewebeschichten umfasst und die Probenpartikel nur aus einer oder aus einer definierten Anzahl der Gewebeschichten gewonnen werden, und/oder wenn mittels des Laserstrahls eine Vertiefung in der Probe erzeugt wird, in der die Probenpartikel suspendiert werden können.

Ausführungsformen der Erfindung werden nachfolgend unter Bezugnahme auf die beigefügten Zeichnungen näher erläutert.

### Kurze Beschreibung der Zeichnungen

Figur 1 zeigt ein Lasermikrodissektionssystem, das im Rahmen eines erfindungsgemäßen Verfahrens verwendet werden kann, in schematischer Darstellung.
Figur 2 zeigt einen Probenbereich eines Lasermikrodissektionssystems gemäß einer Ausführungsform der Erfindung in schematischer Darstellung.
Figur 3 veranschaulicht ein Verfahren gemäß einer Ausführungsform der Erfindung in Form schematisch dargestellter Verfahrensschritte.

In den Figuren sind einander entsprechende Elemente mit identischen Bezugszeichen angegeben und werden nicht wiederholt erläutert.

### Ausführliche Beschreibung der Zeichnungen

In Figur 1 ist ein Lasermikrodissektionssystem, das zur Durchführung eines erfindungsgemäßen Verfahrens verwendet werden kann, schematisch dargestellt und insgesamt mit 100 bezeichnet. Das Lasermikrodissektionssystem 100 entspricht in wesentlichen Teilen jenem, das in der EP 1 276 586 B1 offenbart ist, auf die hier ausdrücklich Bezug genommen wird. Ein Koordinatensystem, anhand dessen die nachfolgend erwähnten Achsen bzw. Richtungen x, y und z veranschaulicht sind, ist in der Figur 1 mit 200 bezeichnet.

Das Lasermikrodissektionssystem 100 umfasst ein Mikroskop 10. In einem Mikroskopfuß 11 des Mikroskops 10 kann eine hier nur teilweise dargestellte Beleuchtungseinrichtung 12 vorgesehen sein. Diese kann beispielsweise eine (nicht dargestellte) Lichtquelle und geeignete Mittel zur Beeinflussung des durch die Lichtquelle bereitgestellten Beleuchtungslichts umfassen, beispielsweise Filter und/oder Blenden. Zur Durchlichtbeleuchtung und zur Einstellung geeigneter Kontrast- bzw. Beobachtungsverfahren kann eine Kondensoreinheit 90 vorgesehen sein.

Das Mikroskop 10 kann als Konfokal-, insbesondere als Spinning-Disk-Mikroskop ausgebildet sein und verfügt in diesem Fall über entsprechende weitere oder alternative Mittel (in Figur 1 nicht dargestellt).

Am Mikroskopfuß 11 kann beispielsweise auch eine Benutzereingabe- und/oder Benutzerinformationseinheit 13 angeordnet sein, die beispielsweise als Touchscreen ausgebildet sein kann, und über die der Benutzer beispielsweise Betrachtungs- und/oder Bearbeitungsparameter eingeben und/oder auslesen kann.

Ferner ist ein Triebknopf 14 vorgesehen. Dieser dient zur Bedienung eines Grob- und eines Feintriebs zur Einstellung einer Höhe eines Mikroskoptischs 30. Eine Probe 51, die sich in einem Probenbereich 50 befindet, beispielsweise eine in einer entsprechenden Halterung angebrachte Gewebeprobe, kann hierdurch in eine Objektebene eines Objektivs 41 gebracht werden. Das Objektiv 41 ist neben weiteren Objektiven 42 in einem Objektivrevolver 40 befestigt. Zum Schutz vor Laserstrahlung kann eine Schutzhaube 15 vorgesehen sein.

Von der Probe 51 ausgehendes Beobachtungslicht verläuft entlang eines Beobachtungsstrahlengangs a. In einer Tubuseinheit 60 mit geeigneten Auskoppeleinrichtungen 61 kann ein vorzugsweise variabler Anteil des Beobachtungslichts, beispielsweise um 60°, ausgekoppelt und mittels eines Okularpaars 62 einem Benutzer dargeboten werden. Ein weiterer Anteil des Beobachtungslichts kann in eine digitale Bilderfassungseinheit 63 eingekoppelt und bildgebend erfasst werden. Der Bilderfassungseinheit 63 kann, vor Ort, in einer Steuereinheit 82 oder einem Steuerrechner 81 (siehe unten), oder in anderer räumlicher Anordnung, ein Bildauswertungsmodul 64 zugeordnet sein.

Das Lasermikrodissektionssystem 100 weist eine Lasereinheit 70 mit einer Laserlichtquelle 75 auf. Ein durch die Laserlichtquelle 75, bei der es sich beispielsweise um eine UV-Laserlichtquelle handeln kann, bereitgestellter Laserstrahl b wird in einer Auflichteinheit, die hier insgesamt mit 76 angegeben ist, an einem ersten Umlenkspiegel 71 und einem zweiten Umlenkspiegel 72 umgelenkt und durch das Objektiv 41 auf die Probe 51 in dem Probenbereich 50 fokussiert.

Bei dem Lasermikrodissektionssystem 100 kann der Ort, an dem der Laserstrahl b auf die Probe 51 in der Objektebene, und damit auch in dem Probenbereich 50 auftrifft, grundsätzlich auf unterschiedliche Weise eingestellt werden. Einerseits kann eine manuelle Verstelleinrichtung 31 vorgesehen sein, mittels derer der als Kreuztisch ausgebildete Mikroskoptisch 30 in x- und y-Richtung (also hier senkrecht bzw. parallel zur Papierebene) verstellt werden kann. Neben der Verstelleinrichtung 31 können auch elektromechanische Stellmittel vorgesehen sein, die beispielsweise durch eine Steuereinheit 82 angesteuert bzw. deren Position durch die Steuereinheit 82 erfasst werden kann.

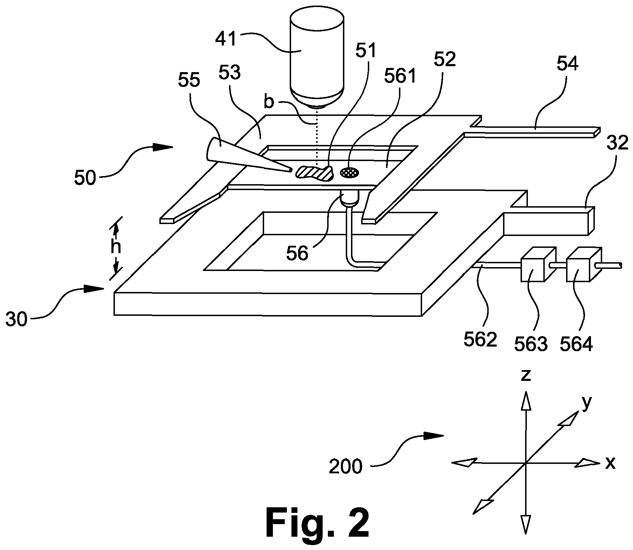

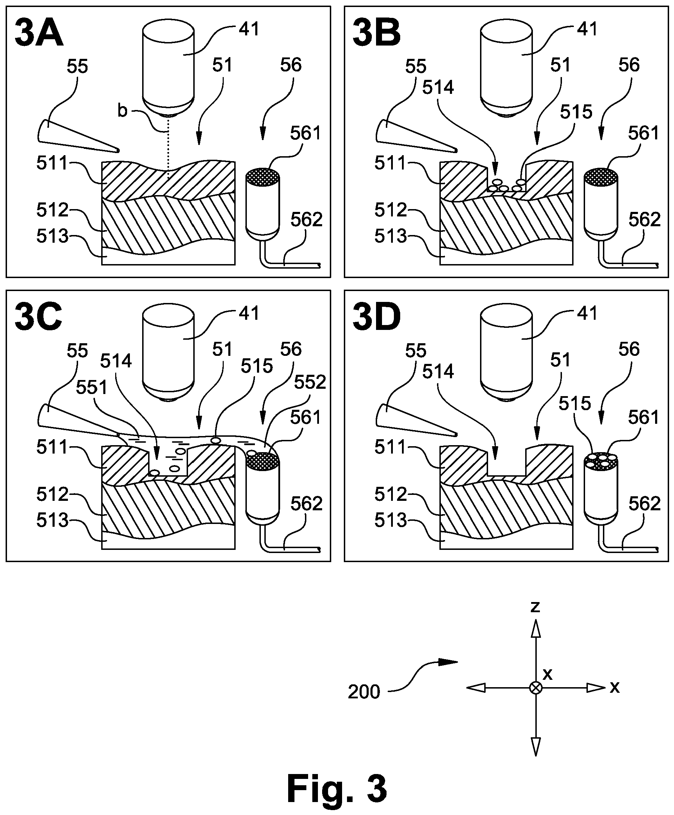

Die Steuereinheit 82 kann auch beliebige weitere motorisierte Funktionen des Lasermikrodissektionssystems 100 steuern und insbesondere eine Schnittstelle zu einem externen Steuerrechner 81, der über entsprechende Verbindungen 83 angebunden sein kann, bereitstellen. Die Steuereinheit 82 oder der Steuerrechner 81 kann auch beispielsweise mittels des Bildauswertungsmoduls 64 erhaltene Daten auswerten. Beispielsweise kann hierdurch eine Abfolge von Gewebeschichten oder anderer Strukturen der Probe 51 erkannt werden. Die Steuereinheit 82 oder der Steuerrechner 81 können auch zum Ansteuern einer Spüleinrichtung, wie sie in den nachfolgenden Figuren 2 und 3 dargestellt ist, verwendet werden.

Für die Lasermikrodissektion kann insbesondere eine Laserablenkeinrichtung 73 vorgesehen sein. Mittels der Laserablenkeinrichtung 73 kann der Laserstrahl b gegenüber einer zwischen dem ersten Umlenkspiegel 71 und dem zweiten Umlenkspiegel 72 verlaufenden optischen Achse c abgelenkt werden. Der Laserstrahl kann daher an unterschiedlichen Positionen auf den zweiten Umlenkspiegel 72 auftreffen, der beispielsweise als dichromatischer Teiler ausgebildet sein kann, und wird damit auch an unterschiedlichen Positionen auf die Probe 51 in der Objektebene fokussiert. Eine Ablenkung mittels einer Laserablenkeinrichtung 73 ist im Detail in der EP 1 276 586 B1 gezeigt. Es sei betont, dass hier unterschiedliche Möglichkeiten zur Ablenkung eines Laserstrahls b bzw. zur Positionierung der Probe 51 in der Objektebene gegenüber dem Laserstrahl b zum Einsatz kommen können. Die Erfindung ist nicht auf das dargestellte Beispiel beschränkt.

Im dargestellten Beispiel weist die Laserablenkeinrichtung 73 zwei massive gläserne Keilplatten 731 auf, die gegen die optische Achse c geneigt und unabhängig voneinander um die optische Achse c drehbar sind. Hierzu sind die Keilplatten 731 mit Kugellagern 732 gelagert. Jede der Keilplatten ist mit einem Zahnrad 733 verbunden. Die Zahnräder 733 können jeweils mittels Aktoren 734 gedreht werden, die mit entsprechenden Ansteuersignalen beaufschlagt werden können und entsprechend die Zahnräder 733 antreiben. Die Rotationseinrichtungen 734 können über Positonsgeber 735 verfügen (hier nur an dem rechten Aktor 734 gezeigt). Eine durch die Positonsgeber 735 erfasste Position kann an die Steuereinheit 82 übermittelt werden.

Figur 2 zeigt einen Probenbereich 50 eines Lasermikrodissektionssystems, beispielsweise des in Figur 1 gezeigten Lasermikrodissektionssystems 100, gemäß einer Ausführungsform der Erfindung in schematischer Darstellung.

In der Figur 2 ist insbesondere die erfindungsgemäß vorgesehene Spüleinrichtung in einer bevorzugten Ausführungsform gezeigt. Diese ist stark schematisiert veranschaulicht und umfasst in der Realität eine Vielzahl weiterer Komponenten wie Pumpen, Fluidspeicher, Ventile und/oder Messeinrichtungen.

Als zentrale Komponenten der Spüleinrichtung sind Fluidabgabemittel 55 zum Bereitstellen eines Suspendierfluids in dem (bzw. an den) Probenbereich 50 und Fluidentnahmemittel 56 zum Entnehmen einer unter Verwendung des Suspendierfluids erzeugten Suspension aus dem Probenbereich 50 vorgesehen. Die Fluidabgabemittel 55 und die Fluidentnahmemittel 56 werden unten näher erläutert.

Die Probe 51 ist auf einem Probenhalter 52, beispielsweise einem Objektträger oder einer entsprechenden Einrichtung mit Befestigungsmitteln zum Befestigen der Probe 51 und/oder Fluidführungsmitteln, angeordnet. Der Probenhalter 52 kann zur Fluidführung auch wannenförmig ausgebildet sein und/oder entsprechende Kanäle zur Fluidführung aufweisen. Der Probenhalter 52 kann beispielsweise vollständig mit Suspendierfluid aus den Fluidabgabemitteln 55 geflutet werden. Die Fluidabgabemittel 55 können hierbei auch zur Abgabe einer definierten Fluidmenge eingerichtet sein, die die Kapazität bzw. Fluidaufnahmefähigkeit des Probenhalters 52 nicht übersteigt. Hierzu können beispielsweise auch die Steuermittel 82 und/oder der Steuerrechner 81 entsprechend parametrisiert werden.

Der Probenhalter 52 kann mittels einer geeigneten Probenführung 53 in x- und y-Richtung (vgl. auch hier das Koordinatensystem 200) auf dem Objekttisch 30 geführt werden. Die Probenführung 53 und der Objekttisch 30 sind hier stark schematisiert dargestellt. Die Probenführung 53 und der Objekttisch 30 weisen geeignete Stellmittel 54 bzw. 32 auf. Die Stellmittel 54 und 32 der Probenführung 53 und/oder des Objekttischs 30 können beispielsweise auch mit einer Verstelleinrichtug 31 (vgl. beispielsweise Figur 1) verstellt und/oder elektromotorisch angesteuert werden. Zumindest der Objekttisch 30 kann, beispielsweise mittels eines Triebknopfs 14 (vgl. beispielsweise Figur 1), auch in z-Richtung verstellt werden.

Wenngleich im dargestellten Beispiel ein Abstand h zwischen dem Objekttisch 30 und der Probenführung 53 gezeigt ist, kann die Probenführung 53 auch direkt auf dem Objekttisch 30 aufliegen. Die Probenführung 53 kann auch zumindest in x- und y-Richtung gegenüber dem Objekttisch 30 beweglich ausgebildet sein.

In der Figur 2 ist ferner ein Mikroskopobjektiv 41 (vgl. beispielsweise Figur 1) gezeigt, mittels dessen der Laserstrahl b in den Objektbereich 50 geführt wird. Der Laserstrahl b trifft an einem Auftreffpunkt auf die Probe 51 auf, der durch eine Laserablenkeinrichtung 73 (vgl. beispielsweise Figur 1) festgelegt werden kann.

Die Fluidabgabemittel 55 können ein- oder mehrkanalig ausgebildet sein und sind zumindest zur Bereitstellung des mehrfach erwähnten Suspendierfluids eingerichtet. Hierzu können die Fluidabgabemittel 55, wie erwähnt, mit Fluidspeichern gekoppelt und beispielsweise manuell und/oder mittels einer Steuereinheit 82 und/oder eines Steuerrechners 81 angesteuert werden.

Die Fluidentnahmemittel 56 sind im dargestellten Beispiel als Ablauf in der Probenhalterung 52 ausgebildet, es ist jedoch auch jegliche andere Anordnung möglich. Am Eingang der Fluidentnahmemittel 56 sind Filtermittel 561 vorgesehen, mittels derer Probenpartikel aus einer mittels des Suspendierfluids erhaltenen Suspension (vgl. hierzu insbesondere Figur 3) herausgefiltert werden können. Wie erwähnt, können die Filtermittel 561, bzw. entsprechende Filter, auch an anderer Stelle angeordnet sein oder wegfallen (beispielsweise dann, wenn die Probenpartikel durch Zentrifugation gewonnen werden sollen).

Die Fluidentnahmemittel 56 weisen ferner Saugmittel 562 zum Absaugen einer entsprechenden Suspension aus dem Probenbereich 50 auf. Diese sind hier vereinfacht als Leitung veranschaulicht und können in der Praxis mit entsprechenden Pumpen, Kolben, Sammelbehältern usw. gekoppelt sein.

Ferner ist den Fluidentnahmemitteln 56 beispielsweise eine Druckmesseinrichtung 563 zugeordnet, die dafür eingerichtet sein kann, einen Unterdruck in den Saugmitteln 562 zu messen. Die Druckmesseinrichtung 563 kann beispielsweise mit einer Steuereinrichtung 82 und/oder einem Steuerrechner 81 (vgl. beispielsweise Figur 1) gekoppelt sein. Durch die Verwendung der Druckmesseinrichtung 563 können beispielsweise Aussagen über die Belegung der Filtermittel 561 bzw. eines entsprechenden Filters getroffen werden.

Den Fluidentnahmemitteln 56 können auch beispielsweise Detektormittel 564 zugeordnet sein, die dafür eingerichtet sein können, Probenpartikel zu detektieren. Dies kann insbesondere dann vorgesehen sein, wenn keine Filtermittel 561 vorgesehen sind. In diesem Fall können die Detektormittel 564 beispielsweise eine Lichtschranke und/oder einen photosensitiven Detektor umfassen und entsprechende Zählimpulse oder andere Daten (beispielsweise bezüglich einer Lichtstreuung) an eine Steuereinheit 82 und/oder einen Steuerrechner 81 übermitteln.

Figur 3 veranschaulicht ein Verfahren gemäß einer Ausführungsform der Erfindung in Form schematisch dargestellter Verfahrensschritte als Teilfiguren 3A bis 3D. Hierbei sind nur einige der Komponenten, die zuvor in der Figur 2 gezeigt wurden, nochmals dargestellt.

In einem ersten Verfahrensschritt gemäß Teilfigur 3A wird eine Probe 51, die im dargestellten Beispiel drei Gewebeschichten 511 bis 513 aufweist, mittels des Laserstrahls b bearbeitet. Die Fluidabgabemittel 55 und die Fluidentnahmemittel 56 sind in diesem Verfahrensschritt nicht in Betrieb.

Der Verfahrensschritt gemäß Teilfigur 3A wird so lange durchgeführt, bis gemäß Teilfigur 3B eine Vertiefung 514 in der Probe 51 bzw. deren oberster Gewebeschicht 511 erzeugt wurde. Der Laserstrahl wird nun abgeschaltet. In der Vertiefung 514 in der Probe 51 liegen nun entsprechende Probenpartikel 515 vor, die nur in einem Fall mit einem Bezugszeichen versehen sind.

In einem nächsten Verfahrensschritt gemäß Teilfigur 3C wird durch die Fluidabgabemittel 55 ein Suspendierfluid 551, beispielsweise ein geeigneter Puffer, in den Probenbereich und damit die Vertiefung 514 der Probe 51 eingebracht. Hierdurch werden die Probenpartikel 515 in dem Suspendierfluid 551 unter Erhalt einer entsprechenden Suspension 552 suspendiert. Auch hier ist die Darstellung stark vereinfacht. In der Realität sind, beispielsweise in einem Objekthalter 52 (vgl. beispielsweise Figur 2), wie erwähnt, entsprechende Fluidleitmittel vorgesehen.

Die erhaltene Suspension 552 kann parallel oder nach der Einbringung des Suspendierfluids 551 in den Probenbereich und damit die Vertiefung 514 der Probe 51 mittels der Fluidentnahmemittel 56 aus dem Probenbereich entnommen werden, beispielsweise durch Absaugen. Sind Filtermittel 561 vorgesehen, scheiden sich die Probenpartikel 515 auf diesem ab. Sind keine Filtermittel 561 vorgesehen, können die Probenpartikel 515 anderweitig entfernt werden.

Nach dem vollständigen Spülen der Probe 51 sind, wie in Teilfigur 3D gezeigt, sämtliche Probenpartikel 515 aus der Vertiefung 514 in der Probe 51 bzw. deren oberster Gewebeschicht 511 entfernt und im dargestellten Beispiel auf den Filtermitteln 561 aufgefangen. Diese stehen damit einer nachfolgenden Untersuchung zur Verfügung. Das Verfahren kann, analog zu Figur 3A, mit der Bearbeitung der Gewebeschicht 512 fortgesetzt werden.

## Patentansprüche

1. Lasermikrodissektionssystem (100) mit einem Mikroskop (10), das eine Auflichteinrichtung (76) mit einer Laserablenkeinrichtung (73) aufweist, welche einen durch eine Lasereinheit (70) bereitgestellten Laserstrahl durch ein Mikroskopobjektiv (41) des Mikroskops (10) auf einen Probenbereich (50) zum Aufnehmen einer biologischen Probe (51) führt und welche einen Auftreffpunkt des Laserstrahls in dem Probenbereich (50) verschiebt,
wobei eine Spüleinrichtung mit Fluidabgabemitteln (55) vorgesehen ist, die ein Suspendierfluid (551) in dem Probenbereich (50) bereitstellt, und dass an der Spüleinrichtung Fluidentnahmemittel (56) angeordnet sind, welche eine unter Verwendung des Suspendierfluids (551) erzeugte Suspension (552) aus dem Probenbereich (50) entnehmen, dass die Fluidentnahmemittel (56) Saugmittel (562) zum Absaugen der Suspension (552) aus dem Probenbereich (50) umfassen **dadurch gekennzeichnet, dass** die Saugmittel (562) Fluidsammelmittel zum Sammeln der Suspension (552) und/oder eines hiervon abgeleiteten Fluids umfassen.

2. Lasermikrodissektionssystem (100) nach Anspruch 1, bei dem die Fluidentnahmemittel (56) Filtermittel (561) zum Gewinnen von suspendierten Probenpartikeln (515) aus der Suspension (552) umfassen.

3. Lasermikrodissektionssystem (100) nach Anspruch 2, bei dem die Filtermittel (561) mit den Fluidentnahmemitteln (56) mittels einer Schnellkupplung verbunden sind.

4. Lasermikrodissektionssystem (100) nach Anspruch 1, bei dem die Spüleinrichtung zumindest eine Druckmesseinrichtung (563) und/oder Einstellmittel zum Einstellen eines Drucks und/oder eines Volumenstroms des Suspendierfluids (551) und/oder der Suspension (552) aufweist.

5. Lasermikrodissektionssystem (100) nach Anspruch 1, bei dem die Spüleinrichtung eine Kühlvorrichtung zum Kühlen des Suspendierfluids und/oder eine Temperiereinrichtung zur Bereitstellung einer konstanten Temperatur des Suspendierfluids aufweist.

6. Lasermikrodissektionssystem (100) nach Anspruch 1, bei dem die Fluidentnahmemittel Detektormittel (564) zum Detektieren von Probenpartikeln (515) in der Suspension (552) umfassen.

7. Lasermikrodissektionssystem (100) nach Anspruch 1, bei dem die Fluidabgabemittel (55) ferner zum Bereitstellen eines Trocknungsfluids in dem Probenbereich (50) eingerichtet sind.

8. Lasermikrodissektionssystem (100) nach Anspruch 1, bei dem das Mikroskop (10) zur Untersuchung von Strukturen unterhalb einer Oberfläche der Probe (51) eingerichtet ist.

9. Lasermikrodissektionsverfahren zum Gewinnen von Probenmaterial aus einer biologischen Probe (51), bei dem die Probe (51) in einen Probenbereich (50) eines Lasermikrodissektionssystems (100) eingebracht wird, das ein Mikroskop (10) mit einer Auflichteinrichtung (76) mit einer Laserablenkeinrichtung (73) aufweist, und bei dem mittels eines Laserstrahls Probenpartikel (515) aus der Probe (51) mobilisiert werden,
wobei eine Spüleinrichtung mit Fluidabgabemitteln (55) und Fluidentnahmemitteln (56) verwendet wird, wobei mittels der Fluidabgabemittel (55) ein Suspendierfluid (551) in dem Probenbereich (50) bereitgestellt wird, mittels des Suspendierfluids (551) die Probenpartikel (515) suspendiert werden, und eine hierdurch erzeugte Suspension (552) mit den Probenpartikeln (515) aus dem Probenbereich (50) entnommen wird, wobei mittels der Auflichteinrichtung (76) ein durch die Lasereinheit (70) bereitgestellter Laserstrahl durch ein Mikroskopobjektiv (41) des Mikroskops (10) auf den Probenbereich (50) und die in diesem aufgenommene Probe (51) geführt und mittels der Laserablenkeinrichtung (73) verschoben wird **dadurch gekennzeichnet, dass** die Probenpartikel (515) aus der Suspension (552) ausgefiltert werden.

10. Lasermikrodissektionsverfahren nach Anspruch 9, bei dem eine Probe (51) mit mehreren Gewebeschichten (511, 512, 513) verwendet wird, wobei Probenpartikel (515) nur aus einer oder aus einer definierten Anzahl der Gewebeschichten (511, 512, 513) gewonnen werden.

11. Lasermikrodissektionsverfahren nach Anspruch 9, bei dem mittels des Laserstrahls eine Vertiefung in der Probe (51) erzeugt wird.

## Claims

1. Laser microdissection system (100) comprising a microscope (10), which has a reflected light device (76) with a laser deflection device (73), the latter guiding a laser beam provided by a laser unit (70) through a microscope objective lens (41) of the microscope (10) and onto a sample region (50) for recording a biological sample (51) and displacing a point of incidence of the laser beam in the sample region (50), wherein a rinsing device with fluid dispensing means (55) is included, the latter providing a suspending fluid (551) in the sample region (50), and wherein fluid removal means (56) are disposed on the rinsing device, said fluid removal means removing a suspension (552), generated using the suspending fluid (551), from the sample region (50), wherein the fluid removal means (56) comprises suction means (562) for sucking the suspension (552) from the sample region (50), **characterized in that** the suction means (562) comprise fluid collection means for collecting the suspension (552) and/or fluid derived therefrom.

2. Laser microdissection system (100) according to Claim 1, wherein the fluid removal means (56) comprise filter means (561) for obtaining suspended sample particles (515) from the suspension (552).

3. Laser microdissection system (100) according to Claim 2, wherein the filter means (561) are connected to the fluid removal means (56) by means of a quick-action coupling.

4. Laser microdissection system (100) according to Claim 1, wherein the rinsing device has at least one pressure measuring device (563) and/or adjustment means for setting a pressure and/or volumetric flow rate of the suspending fluid (551) and/or the suspension (552).

5. Laser microdissection system (100) according to Claim 1, wherein the rinsing device has a cooling apparatus for cooling the suspending fluid and/or a temperature-control device for providing a constant temperature of the suspending fluid.

6. Laser microdissection system (100) according to Claim 1, wherein the fluid removal means comprises detector means (564) for detecting sample particles (515) in the suspension (552).

7. Laser microdissection system (100) according to Claim 1, wherein the fluid dispensing means (55) are further configured to provide a desiccation fluid in the sample region (50).

8. Laser microdissection system (100) according to Claim 1, wherein the microscope (10) is configured to examine structures below a surface of the sample (51).

9. Laser microdissection method for obtaining sample material from a biological sample (51), wherein the sample (51) is introduced into a sample region (50) of the laser microdissection system (100) which has a microscope (10) with a reflected light device (76) with a laser deflection device (73) and wherein sample particles (515) are mobilized from the sample (51) by means of a laser beam, wherein a rinsing device with fluid dispensing means (55) and fluid removal means (56) is used, wherein a suspending fluid (551) is provided in the sample region (50) by means of the fluid dispensing means (55), the sample particles (515) are suspended by means of the suspending fluid (551) and a suspension (552) with the sample particles (515) generated hereby is taken from the sample region (50), wherein the reflected light device (76) is used to guide laser beam provided by the laser unit (70) through a microscope objective lens (41) of the microscope (10) onto the sample region (50) and onto the sample (51) received therein and the laser deflection device (73) is used to displace said laser beam, **characterized in that** the sample particles (515) are filtered from the suspension (552) .

10. Laser microdissection method according to Claim 9, wherein a sample (51) with a plurality of tissue layers (511, 512 513) is used, wherein sample particles (515) are only obtained from one or a defined number of the tissue layers (511, 512, 513).

11. Laser microdissection method according to Claim 9, wherein a depression is generated in the sample (51) by means of the laser beam.

## Revendications

1. Système de microdissection par laser (100), comprenant un microscope (10) qui présente un dispositif d'éclairage incident (76) muni d'un déflecteur de laser (73) qui guide un faisceau laser fourni par une unité laser (70) à travers un objectif de microscope (41) du microscope (10) sur une zone d'échantillon (50) destinée à recevoir un échantillon biologique (51) et qui déplace un point d'incidence du faisceau laser dans la zone d'échantillon (50),
dans lequel un dispositif de rinçage muni de moyens de distribution de fluide (55) est prévu qui fournit un fluide de suspension (551) dans la zone d'échantillon (50), et des moyens d'extraction de fluide (56) sont disposés sur le dispositif de rinçage et extraient de la zone d'échantillon (50) une suspension (552) produite par l'utilisation du fluide de suspension (551), les moyens d'extraction de fluide (56) comprenant des moyens d'aspiration (562) pour aspirer la suspension (552) à partir de la zone d'échantillon (50),
**caractérisé en ce que** les moyens d'aspiration (562) comprennent des moyens de collecte de fluide pour collecter la suspension (552) et/ou un fluide dérivé de celle-ci.

2. Système de microdissection par laser (100) selon la revendication 1, dans lequel les moyens d'extraction de fluide (56) comprennent des moyens de filtrage (561) pour obtenir des particules d'échantillon en suspension (515) à partir de la suspension (552).

3. Système de microdissection par laser (100) selon la revendication 2, dans lequel les moyens de filtrage (561) sont reliés aux moyens d'extraction de fluide (56) au moyen d'un raccord rapide.

4. Système de microdissection par laser (100) selon la revendication 1, dans lequel le dispositif de rinçage présente au moins un dispositif de mesure de pression (563) et/ou des moyens de réglage pour régler une pression et/ou un débit volumétrique du fluide de suspension (551) et/ou de la suspension (552).

5. Système de microdissection par laser (100) selon la revendication 1, dans lequel le dispositif de rinçage présente un dispositif de refroidissement pour refroidir le fluide de suspension et/ou un dispositif d'équilibrage de température pour fournir une température constante du fluide de suspension.

6. Système de microdissection par laser (100) selon la revendication 1, dans lequel les moyens d'extraction de fluide comprennent des moyens de détection (564) pour détecter des particules d'échantillon (515) dans la suspension (552).

7. Système de microdissection par laser (100) selon la revendication 1, dans lequel les moyens de distribution de fluide (55) sont en outre aménagés pour fournir un fluide de séchage dans la zone d'échantillon (50) .

8. Système de microdissection par laser (100) selon la revendication 1, dans lequel le microscope (10) est aménagé pour examiner des structures au-dessous d'une surface de l'échantillon (51).

9. Procédé de microdissection par laser permettant d'obtenir de la matière d'échantillon à partir d'un échantillon biologique (51), l'échantillon (51) étant introduit dans une zone d'échantillon (50) d'un système de microdissection par laser (100) qui présente un microscope (10) comprenant un dispositif d'éclairage incident (76) muni d'un déflecteur de laser (73), et dans lequel des particules d'échantillon (515) sont mobilisées à partir de l'échantillon (51) au moyen d'un faisceau laser,
dans lequel un dispositif de rinçage avec des moyens de distribution de fluide (55) et des moyens d'extraction de fluide (56) est utilisé, les moyens de distribution de fluide (55) permettant de fournir un fluide de suspension (551) dans la zone d'échantillon (50), le fluide de suspension (551) permettant de mettre en suspension les particules d'échantillon (515), et une suspension (552) ainsi produite avec les particules d'échantillon (515) étant extraite de la zone d'échantillon (50),
dans lequel le dispositif d'éclairage incident (76) permet de guider un faisceau laser fourni par l'unité laser (70) à travers un objectif de microscope (41) du microscope (10) sur la zone d'échantillon (50) et l'échantillon (51) reçu dans celui-ci et de déplacer le faisceau laser au moyen du déflecteur de laser (73),
**caractérisé en ce que** les particules d'échantillon (515) sont éliminées de la suspension (552) par filtrage.

10. Procédé de microdissection par laser selon la revendication 9, dans lequel un échantillon (51) comprenant plusieurs couches de tissu (511, 512, 513) est utilisé, des particules d'échantillon (515) étant obtenues uniquement à partir d'une seule ou d'un certain nombre des couches de tissu (511, 512, 513).

11. Procédé de microdissection par laser selon la revendication 9, dans lequel un creux est créé dans l'échantillon (51) au moyen du faisceau laser.
